# EUROPÄISCHE PATENTSCHRIFT

(11) **EP 0 642 040 B1**
(45) Veröffentlichungstag und Bekanntmachung des Hinweises auf die Patenterteilung: **08.03.2000**
(21) Anmeldenummer: 94113786.1
(22) Anmeldetag: 02.09.1994
(51) Int. Cl.: G02B 5/08, C04B 35/83, C04B 41/50

(54) **Reflektor und Verfahren zur Herstellung eines Reflektors**
Reflector and method for the production of a reflector
Réflecteur et méthode de fabrication d'un réflecteur

(30) Priorität: 02.09.1993 DE 4329551
(43) Veröffentlichungstag der Anmeldung: 08.03.1995
(73) Patentinhaber: INDUSTRIEANLAGEN-BETRIEBSGESELLSCHAFT M.B.H., 85521 Ottobrunn (DE); DaimlerChrysler AG, 70567 Stuttgart (DE)
(72) Erfinder: Blenninger, Ernst, D-81735 München (DE); Goedtke, Peter, D-81667 München (DE); Deyerler, Michael, D-86535 Siegertsbrunn (DE); Papenburg, Ulrich, D-85658 Egmarting (DE)
(74) Vertreter: Meissner, Bolte & Partner

(56) Entgegenhaltungen:
- EP-A- 0 433 148
- EP-A- 0 558 991
- WO-A-88/07688
- WO-A-91/17839
- FR-A- 2 616 554
- US-A- 4 444 467
- US-A- 4 465 777
- CHEMICAL ABSTRACTS, vol. 113, no. 26, 24. Dezember 1990, Columbus, Ohio, US; abstract no. 236594z, HIROTA ET AL. Seite 314 ; & JP-A-2 172 882 (KAWASAKI REFRACTORIES)

## Beschreibung

Die Erfindung betrifft ein Verfahren zur Herstellung von Reflektoren oder Spiegeln.

Ein großer Teil der optischen Werkstoffe dient der geordneten Weiterleitung von Strahlen durch Brechung oder Reflexion, wobei auch beide Eigenschaften gleichzeitig ausgenützt werden können. Durch Brechung wirkende Materialien werden vor allem durch die Abhängigkeit ihrer Brechzahl und ihres Transmissionsgrades von der Wellenlänge gekennzeichnet.

Bei Spiegeln und Reflektoren interessiert der Reflexionsgrad als Funktion der Wellenlänge. Bei nicht zu dünnen Metallschichten wird der nicht reflektierte Strahlungsanteil absorbiert. Bei den nahezu absorptionsfrei herstellbaren dielektrischen Spiegeln ist die Widerstandsfähigkeit gegen atmosphärische Einflüsse und ihre Erhöhung durch Schutzschichten wesentlich.

Während im sichtbaren Spektralbereich eine große Anzahl hochtransparenter Gläser zur Verfügung steht, ist dies im UV- und IR-Bereich nicht mehr der Fall. Hier werden die Gläser durch eine kleine Anzahl von Kristallen und davon abgeleiteten Werkstoffen ergänzt, deren wichtigste Eigenschaft ein hoher Transmissionsgrad ist. Einige dieser Materialien (z.B. BaF₂, CaF₂, LiF, Al₂O₃, SiO₂) sind für Breitband- und Multispektralsysteme geeignet, weil ihre Durchlässigkeit vom UV bis zum IR reicht. Bei einigen dieser Stoffe stört die hohe Wasserlöslichkeit, so daß man Schutzschichten vorsehen und/oder die Spiegel nur in völlig getrockneter Luft verwenden kann.

Einkristalle (je nach Kristallart isotrop oder anisotrop) werden aus natürlichen Fundstücken oder durch Kristallzüchtung (Ziehen aus der Schmelze) gewonnen. Polykristallines Material (isotrop) wird durch Drucksintern hergestellt.

Für die meisten Anwendungen kommen nur isotrope Materialien in Frage. Anisotrope Kristalle werden in der Polarisationsoptik verwendet.

Der Halbleiter Silicium mit isotropem Charakter wirkt als Langpaßfilter mit steiler Kante und sperrt somit den sichtbaren und den nahen IR-Bereich. Polykristallines Silicium hat im Anwendungsbereich bei 2 mm Dicke (ohne Reflexminderung) einen Transmissionsgrad σ ? 0,53. Nach einem Transmissionsminimum bei etwa 16 µm liegt der Transmissionsgrad im langwelligen Bereich bis über 300 µm wieder bei 0,4 bis 0,5 und macht, trotz seiner Sprödigkeit, in Kombination mit seinen günstigen thermischen Eigenschaften Anwendungen vor allem in der Infrarotoptik und als Spiegelträger möglich. (Quelle 1: Naumann/Schröder: Bauelemente der Optik, 5. Auflage, Seite 64, Hanser Verlag).

Oberflächenspiegel ergeben durch achromatische Abbildung und Vermeidung anderer mit dem Durchgang durch brechende Materialien verbundene Fehler viele Vorteile vor refraktiven Systemen. Da jedoch die Änderung eines Strahl-Ablenkungswinkels doppelt so groß wie die Änderung des Einfallswinkels ist, werden bei gleichen optischen Anforderungen an Formgenauigkeit und Mikrogestalt der Spiegelflächen höhere Ansprüche gestellt als bei brechenden Grenzflächen. Eine weitere Eigenschaft des Spiegels ist der Verlauf des spektralen Reflexionsgrades. Von der Möglichkeit, die Oberfläche eines massiven Metallkörpers durch gute Politur unmittelbar als Spiegel einzusetzen, macht man heute nur in Ausnahmefällen Gebrauch. Im allgemeinen wird eine Spiegelschicht auf einem Spiegelträger beschichtet. Der metallische Spiegelträger wird vorher poliert und ist für die Formgenauigkeit der Fläche verantwortlich. Auf den Träger wird die Spiegelschicht durch (meist) Aufdampfen im Hochvakuum oder chemische Verfahren aufgebracht. Die Spiegelschicht paßt sich hier völlig der Form der Trägerfläche an und bestimmt den Verlauf der spektralen Reflexionsfunktion und (ggf. zusammen mit Schutzschichten) die zeitliche Stabilität der Reflexionsfunktion. Für Spiegelschichten werden bevorzugt Metalle wie z.B. Aluminium, Chrom, Nickel, Quecksilber, Silber, Gold, Platin, Rhodium, aber auch Siliciummonoxid (SiO) und Siliciumdioxid (SiO₂) eingesetzt (Quelle 1).

An Material für Spiegelträger und Reflektoren werden hohe Anforderungen bezüglich mechanischer und thermischer Stabilität gestellt. Große Spiegel verformen sich bei unterschiedlicher Lage bereits durch ihr Eigengewicht; Verschiebungen um Bruchteile von κ müssen verhindert bzw. durch Gegenkräfte kompensiert werden. Temperaturänderungen und ungleichmäßige Temperaturverteilungen führen zu inneren Spannungen und Verformungen. Wesentliche Anforderungen an ein Trägermaterial für Präzisionsspiegel sind deshalb ein hoher Elastizitätsmodul E und ein sehr niedriger thermischer Ausdehnungskoeffizient α. Weiterhin wird gute Polierbarkeit gefordert, damit optimal glatte Flächen mit geringem Streulichtanteil erzielt werden.

In dieser Hinsicht sind die meisten Metallflächen ungünstig, weil ihre Gefügestruktur wegen abweichender Eigenschaften an den Korngrenzen zu Flächenabweichungen nach dem Polieren führen kann. Es werden aber u.a. Reinkupfer, Aluminium- und Molybdänlegierungen sowie druckgesintertes Beryllium als Spiegel benutzt, wobei die Polierbarkeit durch eine Schicht von chemisch abgeschiedenem Nickelphosphid verbessert werden muß. Metallspiegel haben eine hohe Wärmeausdehnung, können aber wegen ihrer günstigen Wärmeleitfähigkeit nur begrenzt z.B. für Hochleistungslaser eingesetzt werden. Größere Bedeutung haben zur Zeit Glas und Glaskeramiken.

Bestimmte Bauteile, insbesondere für die Raumfahrt, sollen sich neben einer hohen Grundfestigkeit und Temperaturbeständigkeit auch durch ein niedriges Raumgewicht auszeichnen. Darüber hinaus wird eine gute Temperaturwechselbeständigkeit (TWB), verbunden mit einem niedrigen Wärmeausdehnungskoeffizienten (WAK), gefordert.

Beispielsweise sollen zukünftige Satelliten mit einer im Einsatz rotierenden Spiegelstruktur ausgestattet werden. Derartig große Spiegel mit Abmessungen von beispielsweise 800 x 600 mm müssen an einer Stirnseite eine optisch reflektierende Oberfläche aufweisen.

Da im Weltraum-Einsatz mit zyklischen Temperaturwechseln von 0 bis 700 K zu rechnen ist, müssen neben der größenbedingten Bauteilsteifigkeit die Temperatur- und Thermoschockbeständigkeit, niedriges Raumgewicht und nicht zuletzt geringe thermische Ausdehnung gewährleistet werden. Darüber hinaus müssen sich an den in Frage kommenden Werkstoffgruppen hohe Oberflächengüten für reflektierende Optiken erzielen lassen.

Konventionelle Spiegelbauteile werden heute aus einer Glaskeramik gefertigt. Der Herstellungsprozeß erfolgt über das Schmelzen verschiedener Oxidpulver wie z.B. LiO₂, Al₂O₃, MgO, ZnO und P²O⁵ in Platinöfen. Nach der Homogenisierung der Schmelze werden über die Preß-, Gieß- und andere Glasformgebungsverfahren entsprechende Glasformkörper hergestellt. Nach einer Sturzkühlung und dem Entformen erfolgt eine kontrollierte Temperung der Glas-Bauteile auf Temperaturen von ca. 700°C, wobei sich im nichtkristallinen (amorphen) Glas sogenannte Kristallkeime ausbilden. Bei entsprechender Haltezeit führt die angesprochene Keimbildung zum Kristallwachstum und vollzieht die "Keramisierung" des Glases zur Glaskeramik.

Diese kristalline Glaskeramik besitzt die vorteilhafte Eigenschaft, in einem Temperaturbereich von 273 K bis 323 K eine niedrige thermische Ausdehnung von nur 0 ± 0,15 x 10⁻⁶ K⁻¹ aufzuweisen.

Als Spiegelwerkstoff ist diese Glaskeramik nur begrenzt einsetzbar, da sie nur über aufwendige Formgebungsverfahren hergestellt werden kann und außerdem ein relativ hohes Raumgewicht von 2,53 g/cm³, eine geringe Zugfestigkeit und nicht zuletzt ein sprödes Bruchverhalten aufweist. Außerdem ist ihr Einsatzbereich als optische Komponente auf eine konstante oder eine maximale Temperatur von 423 K begrenzt, da die kristalline Struktur von derartigen Glaskeramiken im Temperaturbereich von 200 bis 300 K sowie 360 bis 480 K einer Spannungshysterese unterliegen. Im Temperaturbereich größer 700 K wird das Gefüge bereits irreversibel geschädigt (Quelle 2: SiRA; ESTEC-Contract Nr. 5976/84/NL/PR; Oktober 1985).

Ferner sind Versuche bekannt, Leichtbau-Spiegelbauteile aus preisgünstigem Aluminium (Raumgewicht 2,71 g/cm³) herzustellen. Aufgrund der geringen Steifigkeit des Aluminiums ist es bisher jedoch nicht möglich, daraus Präzisionsoptiken zu fertigen. Für den Einsatz in korrosiver Umgebung müssen Aluminiumspiegel mit einer dicken (0,2 - 0,5 mm) Nickelbeschichtung versehen werden. Aufgrund massiver Wärmeausdehnungsunterschiede zwischen Aluminium (23 10⁻⁶K⁻¹) und Nickel (13 10⁻⁶K⁻ ¹) dürfen diese Spiegel keinerlei Temperaturwechselbeanspruchungen ausgesetzt werden, da sonst thermisch induzierte Risse entstehen.

Spiegel aus reinem Aluminium, wie sie im Vakuum eingesetzt werden können, zeigen schon bei geringer Temperaturbeanspruchung - aufgrund des sehr hohen Wärmeausdehnungskoeffizienten auf den optischen Spiegelflächen - lokale Verformungen, die im Einsatz beispielsweise als Laserspiegel zur Entfernungsmessung zu undefinierten Ergebnissen führen würden (Quelle 2).

Stand der Technik sind auch reflektierende Optiken auf Quarzglasbasis. Aufgrund ihres äußerst niedrigen Wärmeausdehnungskoeffizienten von nahezu Null im Temperaturbereich von 0 bis 273 K sind Quarzglassysteme prädestiniert für sogenannte cryogene Anwendungen. Im Bereich zwischen 273 K und 373 K steigt der thermische Ausdehnungskoeffizient auf 5,1 10⁻⁷K⁻¹. Weitere Nachteile sind das relativ hohe Raumgewicht von 2,2 g/cm³, die geringe Steifigkeit, die niedrige Zugfestigkeit von < 50 MPa, hohe Produktionskosten und die Begrenzung des Durchmessers auf rd. 500 mm wegen des komplexen Herstellungsverfahrens (Quelle: W. Englisch, R. Takke, SPIE, vol. 1113, Reflective Optics II, 1989, page 190-194).

Aufgrund seiner mechanischen und thermischen Eigenschaften sowie des niedrigen Raumgewichts von nur 1,85 g/cm³ eignet sich Beryllium besonders zur Herstellung von Leichtbau-Spiegelstrukturen. Zum Beispiel besitzt Beryllium eine fünfmal höhere Steifigkeit als Aluminium oder Glaswerkstoffe. Beschichtete Berylliumplatten lassen sich auf Rauhtiefen von kleiner 15 Angström (Rₐ) polieren und sind damit prädestiniert für optisch reflektierende Oberflächen.

Besonders nachteilig ist, neben den hohen Rohstoff- und Herstellungskosten, das generell toxische Verhalten von Beryllium-Werkstoffen. Um sie als optische Komponenten unter atmosphärischen Bedingungen einsetzen zu können, müssen diese zuvor mit Nickel beschichtet werden. Aufgrund unterschiedlicher Wärmeausdehnungskoeffizienten von Beryllium (11,2 10⁻⁶K⁻ ¹) und Nickel (15 10⁻⁶K⁻¹) dürfen diese Komponenten keinesfalls auf Thermoschock beansprucht werden und kommen daher nur bei konstanten Temperaturen oder in sehr engen Temperaturbereichen zum Einsatz.

Außerdem wurde festgestellt, daß die über die Vakuum-Heißpreßtechnik oder das heißisostatische Pressen hergestellten Berylliumteile einen anisotropen Werkstoff-Charakter mit unterschiedlichen Eigenschaften in unterschiedlichen Kristallrichtungen aufweisen.

Unter Weltraumbedingungen können unbeschichtete Spiegel verwendet werden. Der hohe Wärmeausdehnungskoeffizient bewirkt jedoch bei den typischen Temperaturwechseln zwischen 0 und 700 K lokale Verformungen auf der optischen Fläche, die Beryllium für den Einsatz in der Präzisionsoptik ausschließen (Quelle 1) und auch bei Satellitenspiegeln zu erheblichen Übertragungsproblemen führen können.

Derartige Spiegelstrukturen werden gegenwärtig auch aus monolithischer Keramik auf der Basis von Siliciumcarbid über die sog. Schlickerguß-Technik hergestellt. Bei diesem Formgebungsverfahren wird in eine als Negativ ausgebildete Gipsform eine Siliciumcarbid-Pulversuspension eingefüllt. In Abhängigkeit von der Verweilzeit der Suspension in den Gipsformen bildet sich ein keramischer Scherben, also der positive Bauteil-Grünkörper, mit unterschiedlicher Wandstärke aus. Nach der Trocknung der Rohlinge erfolgt ein Sinterprozeß in Vakuum- oder Schutzgasöfen bei Temperaturen von bis zu 2200°C. Neben dem aufwendigen Formenbau zur Herstellung der Grünlinge beinhaltet diese Herstellungstechnologie den Nachteil, daß nur bestimmte Geometrien und kleine Baugrößen verwirklicht werden können und die Fertigung insgesamt einer hohen Ausschußrate unterliegt. Da diese Siliciumcarbid-Formkörper bei der Trocknung und Sinterung einer Schwindung unterliegen, kann die erforderliche Maßhaltigkeit nur durch eine kostspielige Bearbeitung mit Diamantwerkzeugen gewährleistet werden. Aufgrund des heterogenen Gefüges wird der Sinterkörper anschließend zusätzlich über die chemische Gasphasenabscheidung mit Siliciumcarbid beschichtet, um Rauhtiefen von weniger als 40 Angström erreichen zu können. Neben dem aufwendigen Herstellungs- und Bearbeitungsverfahren besitzt Siliciumcarbid ein relativ hohes Raumgewicht von 3,2 g/cm³ und zeigt ein äußerst sprödes Bruchverhalten.

Aus der DE 32 46 755 A1 ist bekannt, daß man hochfeste Verbundmaterialien, bestehend aus verschiedenen Laminatschichten in Kombination mit Zellkern- oder Wabenschichten, in Leichtbauweise herstellen kann. Als Rohstoffe kommen dabei kunstharzgetränkte Vliese oder Gewebe aus Papier, Kunststoff, Folie, Glasgewebe, Carbon-Faservliese oder Polyimid zum Einsatz, wobei der Zellkern oder die Wabenschicht eine bessere Stabilität und eine erhöhte Biegesteifigkeit des Formkörpers gewährleisten sollen.

Derartige Verbundmaterialien auf CFK- oder GFK-Basis (kohle- oder glasfaserverstärkte Kunststoffe) sind auf Raumtemperaturanwendungen beschränkt. Aufgrund des inhomogenen Faser- oder Laminataufbaus kann durch eine Oberflächenbearbeitung keine optische Spiegelfläche erzeugt werden.

Aus der DE 38 09 921 A1 ist es bekannt, daß man einen Spiegel herstellen kann, indem man einen handelsüblichen Silicium-Wafer auf einer Tragplatte befestigt. Zur Herstellung größerer Spiegel werden mehrere solcher Wafer nebeneinander angeordnet. Die Fugen zwischen den Wafern werden mittels Laser- oder Elektronenstrahl-Schweißens miteinander verbunden. Nachfolgend wird die Spiegeloberfläche geschliffen und poliert. Als Träger wird ein Körper aus einem Leichtmetall oder aus faserverstärktem Verbund-Kunststoff verwendet. Auch hier treten die oben genannten Nachteile auf, die insbesondere durch die unterschiedlichen Materialien von Träger und Reflektorschicht bedingt sind.

Aus der DE 36 26 780 A1 ist es bekannt, daß man Spiegel nicht nur zur Reflexion von Licht sonder auch als Antennen verwenden kann. Die dort gezeigten Spiegel weisen einen Träger aus kohlefaserverstärktem Material auf. Die Reflektorschicht besteht aus Glas oder Glaskeramik und ist auf den Träger direkt aufgeschmolzen. Die Nachteile derartiger Spiegel sind oben beschrieben.

Aus der DE 30 18 785 A1 ist ein Verfahren zur Herstellung von Spiegeln bekannt, bei welchem zunächst ein Formkörper aus einem hochtemperaturbeständigen Material, nämlich aus Kohlenstoff hergestellt wird, der als Trägerstruktur für den Spiegel dient. Auf diese Trägerstruktur wird zur Bildung des Spiegels eine Frontplatte aus Glas aufgesintert oder aufgeschmolzen. Hier entsteht wieder eine Struktur, bei welcher die Trägerplatte und die Reflektorschicht sehr unterschiedliche thermische Eigenschaften aufweisen, so daß derartige Spiegel nur eine sehr geringe Temperaturschockfestigkeit aufweisen. Das Raumgewicht derartiger Spiegel ist relativ hoch.

Aus der WO 88/07 688 ist bereits ein Verfahren zum Herstellen eines Reflektors bekannt, bei dem ein Trägerkörper aus porösem, mindestens teilweise karbidisiertem Kohlenstoff, einem sogenannten SiC-Schaum gebildet wird und wobei zumindest eine Oberfläche des Trägerkörpers mit einer dünnen Schicht aus Siliciumkarbid-Zement verfestigt ist. Diese Schicht wird durch Bürsten, Sprühen oder einer anderen geeigneten Technik geglättet. Daraufhin wird durch chemische Gasphasenabschaltung (CVD) nochmals eine dünne Schicht aus Siliciumkarbid aufgebracht. Diese Siliciumkarbid-Schicht wird nachfolgend so poliert, daß sie eine optische Reflexionsschicht bildet.

Aus der US-PS 4 444 467 ist ein weiterer Reflektor mit einem Trägerkörper aus karbidisiertem Kohlenstoff bekannt, auf den ein Belag aus Silicium mittels plasmaunterstützter chemischer Gasphasenabscheidung (CVD) aufgebracht ist.

In der EP 0 558 991 A1 ist ein weiteres Verfahren zur Herstellung von Reflektoren beschrieben. Dabei wird ein poröser Trägerkörper aus kohlenstoffaserverstärktem Verbundstoff mit Silicium infiltriert. Anschließend wird als reflektierende Schicht ein Silicium-Wafer aufgeschmolzen oder aufgesintert. Dieses Verfahren hat den Vorteil, daß der Trägerkörper vor dem Infiltrieren mit Silicium ein sehr leicht zu bearbeitender Werkstoff ist und durch das Durchtränken mit Silicium vorteilhafte Eigenschaften erhält, insbesondere eine hohe mechanische und thermische Stabilität. Die Verspiegelung dieses Reflektors ist problematisch.

Der Erfindung liegt daher die Aufgabe zugrunde, ein Verfahren zur Herstellung eines Reflektors mit hoher mechanischer Festigkeit aufzuzeigen, das das Aufbringen von Reflexionsschichten ohne Einschränkung der geometrischen Form des Trägerkörpers ermöglicht.

Diese Aufgabe wird durch ein Verfahren gemäß einem der Ansprüche 1 bis 5 gelöst.

Ein wesentlicher Vorteil liegt darin, daß der Trägerkörper zunächst ein sehr leicht zu bearbeitender Werkstoff nämlich im wesentlichen Kohlenstoff ist, der erst durch das Durchtränken mit Silicium seine besonderen Eigenschaften erhält und dann nur noch mit erhöhtem Aufwand zu bearbeiten ist. Zum anderen liegt ein wesentlicher Vorteil darin, daß die eigentliche reflektierende Schicht auf eine Siliciumschicht aufgetragen wird, welche auf dem (mit Silicium getränkten) Trägerkörper aufgebracht und mit diesem fest verbunden ist. Es ist auch möglich, anstelle eines gesonderten Aufbringens von Silicium den Trägerkörper in einer Siliciumschmelze so zu durchtränken, daß eine seiner Außenflächen im wesentlichen aus einer öffnungs- bzw. porenfreien Siliciumschicht besteht. Diese kann dann geglättet und mit der eigentlichen Reflexionsschicht beschichtet werden.

In der nachfolgenden Beschreibung wird in erster Linie davon ausgegangen, daß Kohlenstoff bzw. Kohlenstoffasern als Grundbaustein für die Formkörper verwendet werden. Es soll aber an dieser Stelle ausdrücklich darauf hingewiesen sein, daß die Entwicklung von Materialien ähnlichen feinstrukturellen Aufbaus bzw. die Verwendung derartiger Stoffe vom Erfindungsgedanken mit umfaßt ist. Ein wesentlicher Gedanke der vorliegenden Erfindung liegt nämlich darin, daß diese "durchtränkt" werden, so daß die Siliciumschicht mit dem Grundkörper fest verbunden ist.

Weiterhin sei darauf hingewiesen, daß in der nachfolgenden Beschreibung im allgemeinen von Silicium-Formkörpern oder -Wafern zur Herstellung der Außenschicht gesprochen wird. Es ist aber auch möglich, metallisches Silicium in körniger Form oder pulverförmig zu verwenden, wobei dann in jedem Fall eine mechanische Nachbehandlung (schleifen, polieren) erforderlich wird.

CFC-Verbundwerkstoffe, welche aus einer Kohlenstoffmatrix und Verstärkungsfasern aus Kohlenstoff bestehen, werden über das Harz-Imprägnier- und Carbonisierungsverfahren industriell gefertigt. Die so entstandenen Werkstoffe zeichnen sich durch eine äußerst günstige Kombination von Werkstoffeigenschaften aus, wie z.B. hohe mechanische Festigkeit im Raum- und Hochtemperaturbereich in Verbindung mit niedrigem Raumgewicht (1,0 - 1,7 g/cm³) und geringe Sprödigkeit.

Die ausgezeichneten Materialeigenschaften von CFC werden dadurch getrübt, daß dieser Werkstoff eine geringe Oxidationsbeständigkeit besitzt und nur sehr begrenzt in sauerstoffhaltiger Atmosphäre eingesetzt werden kann. Die geringe Resistenz gegenüber Sauerstoff beschränkt CFC zur Zeit auf den Vakuum- und Schutzgaseinsatz, da sonst bei Temperaturen oberhalb von 400°C ein Abbrand einsetzt.

Um die Oxidationsbeständigkeit dieser Verbundwerkstoffe zu erhöhen, wurden die sog. Ceramic Matrix Composites (CMC) entwickelt. Bei diesen Werkstoffen werden in die poröse CFC-Matrix refraktäre und keramische Komponenten infiltriert. Es ist auch die Herstellung von Kurzfaser-Formkörpern möglich, wobei Kurzfasern auf Kohlenstoffbasis in einer Phenolharz-Suspension gelöst sind und bei Temperatursteigerung aushärten. Bei weiterer Temperaturaufgabe werden die Harzbindemittel beider Compositequalitäten unter Ausschluß von Sauerstoff carbonisiert.

Das hier beschriebene Bauteil weist als Grundkörper faserverstärkte CFC-oder CMC- oder Kohlenstoff-Waben-Composites und oberflächlich metallisches Silicium auf. Unter metallischem Silicium ist dabei elementares Silicium zu verstehen, welches durch Diffusions-, Sinter- oder Anschmelzvorgänge von Silicium-Formkörpern oder Wafern oder Siliciumpulver auf CFC-Trägersubstraten appliziert wurde. Silicium-Wafer sind metallische Scheiben, bestehend aus Reinstsilicium. Das Silicium kann ein isotropes oder polykristallines Gefüge aufweisen.

Insgesamt unterscheiden sich kohlenstoffaserverstärkte Kohlenstoffkörper von den bekannten Kohlenstoff-Werkstoffen durch eine Reihe verbesserter mechanischer und physikalischer Eigenschaften aus und können bis 2200° C unter Inertatmosphäre eingesetzt werden. Diese Eigenschaften sind aufgrund zahlreicher Variationsmöglichkeiten im Herstellungsprozeß in weiten Bereichen variierbar und zwar durch die Wahl des Kohlenstoffasertyps und der Faservorbehandlung, der Faserorientierung bzw. Anordnung, Fasergehaltes, der Formgebungsverfahren (Preß-, Laminier- bzw. Wickelverfahren), die Anzahl der Nachverdichtungszyklen sowie gegebenenfalls Glüh- und Graphitierungstemperaturen. Hierdurch lassen sich das Gefüge, insbesondere die Struktur, die Matrix und die Porosität gezielt beeinflussen und auf die jeweiligen anwendungstechnischen Anforderungen einstellen.

Prinzipiell ist es ebenfalls möglich, anstelle von Kohlenstoffasern Siliciumcarbidfaserverstärktes Siliciumcarbid zu verwenden.

Erfindungsgemäß kann auch eine sogenannte Dampfsilizierung stattfinden. Dabei werden die porösen Trägerkörper bei Temperaturen zwischen 1600° C und 2300° C einer siliciumhaltigen Atmosphäre (Siliciumdampf) ausgesetzt und so infiltriert.

Die Erfindung erlaubt die Herstellung von Bauteilen mit komplexer Geometrie, hoher Temperaturwechselbeständigkeit, niedrigem Raumgewicht (0,5 - 2 g/cm³) bei gleichzeitig hoher Festigkeit (> 150 MPa), geringem Wärmeausdehnungskoeffizienten (WAK) und Oberflächen, die sich für reflektierende Optiken eignen.

Ein weiterer Vorteil des erfindungsgemäßen Verfahrens liegt darin, daß preisgünstige, handelsübliche Werkstoffe verwendet werden können, die sich auf jeder Werkzeugmaschine bearbeiten lassen, bevor sie mit Silicium "behandelt" werden.

Darüber hinaus können die Dichte und Festigkeit des Bauteils gezielt über die Auswahl der Trägerstrukturen und die Quantität bzw. Qualität der gewählten Infiltrationsprozesse eingestellt werden. Die Wärmeausdehnungskoeffizienten der erfindungsgemäß eingesetzten Werkstoffgruppen sind untereinander sehr ähnlich; somit ergeben sich sehr genaue, formstabile Teile, auch bei großen Abmessungen.

Dabei können vorteilhafterweise jegliche CFC-Rohstoffe, insbesondere auf Lang- oder Kurzfaserbasis sowie mit orientiertem oder unorientiertem Faseraufbau verwendet werden. Darüber hinaus kann das erfindungsgemäße Verfahren auch an bekannten Wabenstrukturen auf Papier, Zellstoff- oder Kohlefaserbasis angewendet werden.

Der eingesetzte CFC-Vollkörper besitzt eine Dichte von höchstens 1,4 g/cm³, d.h. er weist eine hohe Porosität auf. Abgesehen von den Poren weist der Vollkörper keine Hohlräume auf, d.h. er ist von seiner Form her ein massiver Körper, z.B. eine Platte, ein Block oder ein Vollzylinder. Bei mehrdimensional orientierten CFC-Qualitäten mit Langfaseraufbau geht man in der Regel von in Harz getränkten Kohlefasergeweben, sog. Prepregs aus, die in beheizbaren axialen Pressen zu CFK-Platten verpreßt werden.

Zur Herstellung von CFC-Vollkörpern auf Kurzfaserbasis werden in bekannter Weise Kohle- oder Graphitfasern in einem wärmehärtbaren Harzbindemittel suspendiert. Die Suspension wird in eine Form gegeben und anschließend die Lösungsmittel z.B. durch Erwärmen entfernt und das Harz-Bindemittel und damit der CFK-Vollkörper ausgehärtet. Bei allen CFC-Qualitäten soll die Faserverstärkung einer Versprödung der keramisierten CFC-Werkstoffe entgegenwirken und ein quasiduktiles Bruchverhalten aufrecht erhalten. Die aus den bekannten Formgebungsverfahren hergestellten Wabenstrukturen z.B. auf Hartpapier- oder Kohlefaserbasis werden zur Erhöhung der Kohlenstoffausbeute mit einem Harzbindemittel, vorzugsweise Phenolharz, imprägniert und in einer anschließenden Wärmebehandlung ausgehärtet.

Gemeinsam ist allen CFC- oder Wabenstrukturen die anschließende Carbonisierung des Bindemittelharzes im Vakuum oder Schutzgas bei Temperaturen von beispielsweise 900 - 1300°C. Die erhaltenen CFC-Vollkörper oder Wabenstrukturen werden dann vorzugsweise in Vakuum- oder Schutzgasatmosphäre auf Temperaturen von mehr als 2000°C erhitzt, um eine zumindest teilweise Graphitierung der C-Matrix und Fasern vorzunehmen.

Durch materialabtragende Bearbeitung wird dann aus den Vollkörpern der entsprechende CFC-Rohling hergestellt, der die Maße des herzustellenden Bauteils, also beispielsweise die Spiegelgrundstruktur eines Satelliten oder anderer optisch reflektierender Systeme besitzt. Die materialabtragende Bearbeitung kann beispielsweise durch Drehen, Fräsen oder Schleifen erfolgen, wobei die zur spanabhebenden Bearbeitung von metallischen Werkstoffen bekannten Maschinen eingesetzt werden können. Zur weiteren Gewichtsersparnis können vorteilhafterweise bei der Bearbeitung der CFC-Rohstoffe an der Rückseite der Spiegelstrukturen Taschen beliebiger Geometrie eingefräst, erodiert oder gebohrt werden. Die Kohlenstoff-Wabenstrukturen können nach der Carbonisierung an den Stirnseiten mit Kohlefasergeweben beliebiger Art oder Gewebeprepregs mittels eines Harzbindemittels zu einem Verbund laminiert werden. Es ist außerdem möglich, die Wabenstrukturen in das hochporöse Kurzfaser-CFC einzupressen oder die mit CFC-Geweben ummantelten Wabenstrukturen zu einem Sandwich-System, bestehend aus mehreren Wabenstrukturen, zu verpressen, um so nach der Carbonisierung einen hochtemperaturbeständigen Leichtbaukonstruktionswerkstoff mit hoher Steifigkeit und quasiduktilem Bruchverhalten zu erhalten.

Der nach der Bearbeitung erhaltene CFC- oder Wabenrohling, der wie der Vollkörper eine geringe Dichte von 0,1 - 1,3 g/cm³ und damit eine hohe Porosität von bis zu 90 Vol-% aufweist, kann anschließend erneut über die Imprägnierung von Harzbindemitteln und deren Carbonisierung weiter infiltriert und verfestigt werden.

Auch eine Infiltration über die chemische Gasphasenabscheidung (CVD) mit pyrolytischem Kohlenstoff bis zu einer Dichte von maximal 1,4 g/cm³, vorzugsweise 0,3 - 1,0 g/cm³, kann zur notwendigen Verfestigung der CFC-Rohlinge und somit Versteifung der Spiegelgrundstruktur führen. Während bei der Harzimprägnierung vorzugsweise Phenolharze zum Einsatz kommen, wird bei der chemischen Gasphasenabscheidung des Kohlenstoffs vorzugsweise ein Gemisch aus Kohlenwasserstoffen, wie Methan oder Propan, und einem inerten Gas, wie Argon oder Stickstoff, bei einer Temperatur zwischen 700 und 1100°C und einem Druck von 1 - 100 Millibar durchgeführt. Das Gas diffundiert in die offenporige Struktur, zersetzt sich in Kohlenstoff und Wasserstoff, wobei der Kohlenstoff vorzugsweise als pyrolytischer Kohlenstoff an den Faseroberflächen bzw. an den Faserkreuzungspunkten abscheidet und so eine Festigkeitssteigerung erzielt wird.

Die aus beiden Infiltrationsverfahren erhaltenen CFC-Rohlinge werden an der für die Spiegelfläche vorgesehenen Seiten oberflächlich geschliffen und in einen Vakuum- oder Schutzgasofen eingebaut. Auf die geschliffene Seite werden ein oder mehrere metallische Silicium-Formkörper aufgelegt und die Probe auf Temperaturen von 1300 - 1600°C, vorzugsweise 1350 - 1450°C aufgeheizt. Durch eine chemische Reaktion des Kohlenstoffs mit dem Silicium bildet sich an den Grenzflächen Siliciumcarbid aus, welches zu einer Verfestigung oder Fügung und damit zur Applizierung des Silicium-Wafers auf dem CFC-Trägersubstrat führt. Neben der chemischen Reaktion können auch Anschmelzvorgänge des metallischen Siliciums oder Diffusion zur Applizierung der Wafer auf dem CFC-Rohling führen und sich so optisch reflektierende Strukturen ausbilden.

Auf sog. Ceramic-Matrix-Composites (CMC), welche beispielsweise in der Matrix Siliciumcarbid und Silicium aufweisen, können metallische Silicium-Wafer bei Temperaturen von 1300 - 1600°C fest appliziert werden.

Eine besonders vorteilhafte Ausgestaltung des Verfahrens sieht auch vor, daß man die zu verspiegelnden Flächen mit einem oder mehreren Silicium-Formkörpern oder Si-Wafern belegt und die so vorbereiteten Spiegelträger mit ihrem unteren Ende in eine dotierte Siliciumschmelze stellt. Durch die Kapillarkräfte in der Trägerstruktur steigt das geschmolzene Silicium im Rohling bis zu den hochreinen Silicium-Formkörpern bzw. dem aufgelegten Pulver nach oben, wodurch zum einen der Rohling zum CMC veredelt wird und die aufliegenden Silicium-Formkörper oder Wafer bzw. die Pulverkörper untereinander verbunden und fest an das Bauteil gefügt werden. Trägerstrukturen, die aus mehreren Teilelementen gesteckt oder gefügt sind, können außerdem durch das aufsteigende Silicium zu einer Gesamtstruktur verfestigt werden.

Die Infiltration des CFC-Rohlings erfolgt mit einer solchen Menge an geschmolzenem metallischem Silicium, daß seine Dichte weniger als 2,0 g/cm³, vorzugsweise 1,5 - 1,8 g/cm³ beträgt. Vorteilhafterweise sind die handelsüblichen metallischen Silicium-Einkristall-Wafer schon derart vorgeschliffen und poliert, daß sie nach der Applizierung direkt optisch reflektierende Flächen ausbilden und so spanabhebende Bearbeitungszyklen auf ein Minimum reduziert oder ausgeschlossen werden können. Um ein massives Anschmelzen, Deformieren und Abdampfen der aufliegenden Siliciumteile zu verhindern, darf eine maximale Prozeßtemperatur von 1550°C nicht überschritten werden; die Prozeßtemperatur liegt vorzugsweise zwischen 1350 und 1500°C. Eine besonders vorteilhafte Ausgestaltung des erfindungsgemäßen Verfahrens sieht auch vor, daß man die Silicium-Formkörper vor der Applizierung mit einem Kleber oder Harzbindemittel auf die CFC- oder CMC- oder Wabengrundstrukturen aufklebt und diese bei der Temperaturbehandlung entsprechende Diffusions-, Sinter- oder Anschmelzvorgänge an der Grenzfläche zwischen dem Trägersubstrat und den Silicium-Formkörpern fördern.

Als Kleber oder Harzbindemittel können vorteilhafterweise Precursoren auf Polysilan- oder Siliciumcarbonitrid-Basis und/oder Kleber auf Silicium-, Siliciumcarbid oder Kohlenstoff-Basis oder Silikone eingesetzt werden. Vor der Reaktionsapplizierung müssen die Kleber bei Temperaturen zwischen 100 und 200°C getrocknet bzw. gehärtet werden. Eine Pyrolyse der Harzbindemittel erfolgt bei 1000°C in Vakuum- oder Schutzgasatmosphäre.

Polysilane (Polymethylphenylsilane) besitzen beispielsweise je nach Lösungsmittel nach der Pyrolyse unter Inertgas bei 1200°C eine keramische Feststoffausbeute von 30 bis maximal 70 Gew.-%.

Für Spiegel- und Reflektorverwendungen im Temperaturbereich von beispielsweise 250 und 330 K ohne größere Temperaturschwankungen führt eine Klebung der Siliciumteile mittels Silikonen auf die Trägerstrukturen zu einer ausreichenden Verfestigung zwischen den Trägern und der Spiegelschicht.

Auch der Einsatz von Glasfritten führt bei einer entsprechenden Temperung über 600°C zu einer Applizierung der Siliciumkörper durch Anschmelzvorgänge auf den CFC- oder CMC-Spiegelträgern.

Das Verfahren sieht weiterhin vor, daß man mehrere Silicium-Formkörper oder Si-Wafer oder auch Pulver unterschiedlicher Dotierung bzw. Schmelzpunkte als sog. Multilayer auf die CFC- oder CMC- oder Wabenträgerstrukturen aufbringt, wobei die Silicium-Formkörper vorzugsweise derart angeordnet sind, daß das Si-Formteil mit dem niedrigsten Schmelzpunkt direkt auf dem Trägersubstrat aufgebracht ist und alle darüber angeordneten Silicium-Körper einen höheren Schmelzpunkt aufweisen. Undotiertes Reinstsilicium besitzt beispielsweise seinen Schmelzpunkt bei 1412°C. Je nach der Quantität der Verunreinigungen im Silicium (Dotierung) kann der Schmelzpunkt aufgrund von Eutektikumsbildungen entsprechend herabgesetzt werden.

Erfindungsgemäß werden die reflektierenden Schichten, bestehend aus Kohlenstoff oder Siliciumcarbid oder Silicium oder Siliciumdioxid oder Siliciumnitrid oder Gold oder Silber oder Nickel oder Kupfer oder aus Legierungen derselben, durch physikalische Gasphasenabscheidung (PVD = Physical Vapour Depostion), vorzugsweise im Temperaturbereich von 20° C bis 900° C, im Vakuum oder unter Schutzgasatmosphäre, auf die unbearbeitete oder geschliffene Reflektoroberfläche der Trägerstruktur aus faserverstärkten Keramiken (CMC = Ceramic Matric Composites) aufgebracht.

Diese PVD-Beschichtungen entstehen im Gegensatz zu thermischen Spritzschichten, die durch Übertragen von Tröpfchen oder Partikeln auf die Substratoberfläche aufgebracht werden, die durch Übertragen von Tröpfchen oder Partikeln auf die Substratoberfläche aufgebracht werden durch das Abscheiden von Atomen oder Molekülen aus der Gasphase in einem Schichtdickenbereich, welcher von wenigen Angstroem bis zu einigen Millimetern reichen kann. Zu den gängigen PVD-Schichten zählen Vakuumdampfschichten; Sputterschichten und Ionenplattierschichten. Auf diese Weise können unterschiedliche Werkstoffe wie zum Beispiel Metalle, Metallegierungen, Gläser, Keramiken und Nichtmetalle sowie Kunststoffe auf Oberflächen abgeschieden werden.

Beim Vakuumaufdampfverfahren werden Metalle oder Verbindungen im Vakuum verdampft und auf Spiegelträger-Oberflächen, welche eine wesentlich niedrigere Temperatur als der Dampf haben, abgeschieden. Die Energie, mit welcher die Atome oder Moleküle auf der Substratoberfläche auftreten, ist gering und nicht ausreichend, um eine gute Haftung der Schicht zu erzielen. Daher wird die Oberfläche der zu beschichtenden Spiegelseite besonders vorbereitet. Dies kann beispielsweise in der Bedampfungsanlage geschehen durch Beschießen der Oberfläche mit Ionen inerter Gase in einem Glimmlichtplasma und/oder durch Erhitzen der Teile auf mehrere 100 °C um Verunreinigungen und adsorbierte Filme (Feuchtigkeit) abzudampfen. Das Beschichtungsmaterial wird thermisch durch Widerstandsheizung oder Hochfrequenzheizung oder mittels Elektronenstrahl oder Laserstrahl verdampft. Im Vakuumverfahren beträgt die freie Wegelänge der Atome/Moleküle einige Meter, so daß diese direkt, d.h. ohne Zusammenstöße mit den Molekülen der Restgasatmosphäre, auf die Substratoberfläche gelangen können und zu dem Aufdampffilm kondensieren.

Reflektierende Schichten der erfindungsgemäßen Reflektoren können auch durch sogenannte Sputter-Verfahren (Aufstäuben) hergestellt werden. Hier wird eine Wolke von Partikeln in einem Glimmlichtplasma erzeugt. Zwischen der aus dem Beschichtungsmaterial bestehenden Kathode und der Anode werden durch Spannung von ca. 1-10 kV aus einem Edelgas (z.B. Ar) Edelgasionen (Ar+) erzeugt, mit welchem die Kathode beschossen wird. Kathodenmaterial stäubt atomar ab und schlägt sich auf dem in der Nähe der Katode angebrachten Spiegelsubstrat nieder. Bauteil (Probenhalter) und Rezipient liegen an der Masse. Das Anstäuben von Schichten kann in Abwandlung des Verfahrens auch in eine reaktiven Gasatmospähre stattfinden, mit welcher die abgestäubten Metalle Verbindungen eingehen wie Carbide, Nitride, Oxide, welche sich dann als Schicht abscheiden.

Beim Ionenplattieren wird das Beschichtungsmaterial in ein Plasma, welches zwischen Verdampfungsquelle und zu beschichtendem Spiegelbauteil aufrecht gehalten wird, eingedampft und aus diesem auf dem Substrat abgeschieden. In einer evakuierbaren Anlage wird Beschichtungsmaterial mittels thermischer Verdampfer, Induktionsheizung oder Elektronenstrahlkanone verdampft. Zwischen dem als Kathode gepolten Substrat und der Anode (Verdampfungsquelle) wird ein Plasma erzeugt. Durch Stoßionisation des Edelgases im Plasma erzeugte Anionen werden auf das Spiegelsubstrat geschossen. Fremdschichten werden dabei abgestäubt, die Oberfläche des Substrats gereinigt, angeätzt und aktiviert. Die in das Plasma aus der Verdampfungsquelle eingebrachten Teilchen des Beschichtungswerkstoffes werden zu etwa 1% durch Stoßionisation ionisiert und im elektrischen Feld zum Spiegelsubstrat hin beschleunigt, welches im Falle eines Nichtleiters mit einem als Kathode gepolten elektrische leitenden Drahtnetz überzogen ist. Die beschleunigten ionisierten Teilchen verlieren durch Umladung ihre Ladung wieder, behalten aber auch in diesem Zustand ihre als Ion erhaltene Geschwindigkeit bei und treffen mit hoher Energie auf die Substratoberfläche auf. Wegen der simultanen Abläufe - Absputtern der Oberfläche und Aufbringen des Beschichtungsmaterials - liegt jeweils eine für den optimalen Schichtaufbau erforderliche saubere Oberfläche vor. Das Eindringen der beschleunigten Teilchen in die Substratoberfläche führt quasi zu einer Art Diffusionsschicht, welche für die ausgezeichnete Haftfestigkeit der Ionenplattierschicht ursächlich ist. Auch beim Ionenplattieren ist die Variante des reaktiven Ionenplattierens gegeben. In das Plasma eingebrachte Stoffe reagieren in diesem oder auf dem Substrat mit dem Partner unter Ausbildung neuer schichtbildender Stoffe.

Beim Vakuumbedampfen und beim Ionenplattieren werden die Spiegelbauteile Temperaturen bis über 800° C ausgesetzt, so daß vorteilhafterweise ein Einfluß auf den Substratwerkstoff (Verzahnungs- oder Haftvermittlerschicht) gegeben sein kann. Beim Aufstäuben (Sputtern) von Schichten werden die Spiegelsubstrate nur ca. 300-500° C heiß. Bei komplex geformten Reflektorbauteilen sollte als Beschichtungsverfahren wegen seiner guten Streufähigkeit das Aufstäuben gewählt werden. Zu ausgezeichneter Haftung der Schicht auf dem Spiegelsubstrat führen Aufstäuben und Ionenplattieren.

Erfindungsgemäß werden alternativ oberflächenverfeinernde und/oder reflektierende Schichten, bestehend aus Kohlenstoff oder Siliciumcarbid oder Silicium oder Siliciumdioxid oder Siliciumnitrid oder Nickel oder aus Legierungen derselben durch chemische Gasphasenabscheidung (CVD = Chemical Vapour Deposition), vorzugsweise im Temperaturbereich von 600° C bis 2000° C, im Vakuum oder unter Schutzgasatmosphäre, auf die unbearbeitete Trägerstruktur oder die geschliffene Reflektoroberfläche der Trägerstruktur aus faserverstärkten Keramiken (CMC = Ceramic Matrix Composites) aufgebracht.

Unter chemischer Gasphasenabscheidung (CVD) versteht man grundsätzlich, daß verschiedene Reaktions- und Trägergase in bestimmten stöchiometrischen Verhältnissen thermisch zersetzt werden und so zu sich abscheidenden festen Stoffen und gasförmigen Nebenprodukten reagieren. Als Feststoffprodukte können Metalle, metallische und nichtmetallische Verbindungen sowie organische Strukturen in der das Werkstück umgebenden Gasatmosphäre auf der Werkstoffoberfläche gebildet und dort abgeschieden werden. Als Substratwerkstoff können alle Metalle und Nichtmetalle verwendet werden, soweit sie die für die chemische Reaktion nötigen thermischen Belastungen ohne Schädigung ertragen können. Das CVD-Verfahren erlaubt u.a. die Herstellung von keramischen Schichten und Gefügen mit extrem hoher Reinheit, die einzigartige mechanische, chemische, thermische, elektrische und/oder optische Eigenschaften aufweisen.

Beim CVD-Prozeß (Oberflächenabscheidung) wird das heranströmende Gas bzw. die Gasmischung thermisch in der Gasphase und/oder an dem heißen Bauteil zersetzt. Die nichtflüchtigen Bestandteile dieser Zersetzung, wie z.B. Kohlenstoff oder Silicium oder Siliciumcarbid bilden Keime, diese wachsen und bilden eine Schicht auf dem Spiegelbauteil. Die wichtigsten phys. Prozeßparameter für die Abscheidung im CVD-Reaktor sind die Temperatur, die Temperaturverteilung, der Partialdruck, die Gaszusammensetzung und -menge und die Gasgeschwindigkeit sowie die damit verbundenen Strömungsverhältnisse am Bauteil und im Reaktor. Anlagen- und bauteilspezifische Gesichtspunkte wie z.B. Ofenmaße und -ausführung, die Geometrie des Werkstücks und die Position im Ofen spielen ebenfalls eine Rolle, wobei nicht zuletzt der zu beschichtende Substratwerkstoff einen entscheidenden Einfluß auf die Prozeßführung ausübt.

Eine weitere erfindungsgemäße Ausgestaltung sieht vor, daß die optisch reflektierende Schicht, bestehend aus Nickel oder Silber oder Gold oder Kupfer oder aus Legierungen derselbe, durch Elektrolyse, vorzugsweise im Temperaturbereich zwischen 20 °C bis 200 °C, auf die geschliffene Reflektorfläche oder auf die Trägerstruktur aus faserverstärkten Keramiken (CMC) aufgebracht wird.

Auch thermische Spritzbeschichtungsverfahren wie das Flammspritzen oder das Plasmaspritzen kann zum Aufbringen von reflektierenden Schichten bestehend aus Silicium oder Siliciumcarbid oder Siliciumoxid oder Siliciumnitrid oder Nickel oder aus Legierungen derselben herangezogen werden. Die Reflektorschicht entsteht durch das Übertragen von Tröpfchen oder Partikeln der entsprechenden aufzubringenden Werkstoffe auf die Spiegelträgeroberfläche.

Das Aufbringen der Silicium-Formkörper auf die Trägerstrukturen bei erheblich niedrigeren Prozeßtemperaturen (wobei in bestimmten Anwendungsfällen unter Verzicht auf Schutzgas oder Vakuum in Normalatmosphäre gearbeitet werden kann) wird dadurch möglich, daß die Silicium-Formkörper vor dem Verbinden mit der Trägerstruktur mit Gold beschichtet werden. Silicium bildet zusammen mit Gold im Temperaturbereich von 350 - 400°C ein plastisch verformbares Schmelzeutetikum aus. Dadurch ist es möglich, die Silicium-Formkörper, z.B. Wafer, bei Temperaturen von 300 - 600°C auf die Trägerstruktur durch Aufschmelzen aufzubringen.

Gold besitzt den Vorteil, daß es einen ähnlichen Wärmeausdehnungskoeffizienten wie Silicium hat, so daß thermisch verursachte Schäden infolge Temperaturwechselbeanspruchungen auszuschließen sind. Ein weiterer Vorteil von Gold besteht darin, daß es aufgrund seiner chemischen Inertheit nur mit Silicium reagiert. Dadurch ist ein Anschmelzen der goldbeschichteten Silicium-Formkörper auf die Trägerstrukturen im Grenzfall bei Normalatmosphäre im Niedrigtemperaturbereich von ca. 300 - 450°C möglich, wodurch sich die Kosten gegenüber Anschmelzen im Vakuum oder unter Schutzgas deutlich senken lassen. Bei hohen Qualitätsanforderungen bezüglich des einwandfreien Kontaktierens der Silicium-Formkörper auf die Trägerstrukturen ist das Aufsintern im Vakuum jedoch vorzuziehen.

Die Goldbeschichtung der Silicium-Formkörper kann z.B. durch Goldfolien oder durch physikalische Gasphasenabscheidung (Sputtern) erfolgen, die Schichtdicke sollte ca. im Bereich von 0,5 - 50µ liegen. Im Prinzip kann die Goldbeschichtung - statt auf den Silicium-Formkörper - auch auf der zu verspiegelnden Fläche der Trägerstruktur aufgebracht werden.

Anstelle von Gold können prinzipiell auch andere NE-Metalle oder Materialien verwendet werden, die mit Silicium ein plastisch verformbares Schmelzeutetikum ausbilden. Als Beispiel sei Aluminium genannt, das mit Silicium im Temperaturbereich con ca. 500 - 650°C ein Schmelzeutetikum ausbildet. Da Aluminium jedoch eine sinterhemmende Al₂O₃-Oxidschicht ausbildet, muß hier unter Vakuum oder Schutzgas appliziert werden. Außerdem hat Aluminium einen höheren Wärmeausdehnungskoeffizienten als Silicium, wodurch Anwendungen mit stärkeren Temperaturschwankungen eingeschränkt sind.

Die Auswahl des Beschichtungsmaterials wird im Einzelfall von den Einsatzbedingungen, Qualitätsvorgaben und von den Kosten für Material und Herstellprozesse bestimmt werden.

Nachfolgend werden bevorzugte Ausführungsformen der Erfindung anhand von Abbildungen näher beschrieben. Hierbei zeigen
- Fig. 1: einen Querschliff einer Silicium-Wafer-Applizierung auf einem CMC-Substrat bei 20-facher Vergrößerung,
- Fig. 2: den Anschliff nach Fig. 1 bei 40-facher Vergrößerung,
- Fig. 3: den Anschliff nach Fig. 1 bei 100-facher Vergrößerung,
- Fig. 4: den Anschliff nach Fig. 1 bei 200-facher Vergrößerung,
- Fig. 5A: einen Großspiegel, der aus Facetten zusammengesetzt ist,
- Fig. 5B: einen Teilausschnitt des Spiegels nach Fig. 5A,
- Fig. 5C: eine andere Ausführungsform eines Großspiegels in einer Darstellung ähnlich der 5B,
- Fig. 6A: einen Längsschnitt durch eine bevorzugte Ausführungsform einer Trägerstruktur,
- Fig. 6B: einen Schnitt entlang der Linie VI-VI aus Fig. 6A,
- Fig. 7: ein Bild einer Silicium-Wafer-Applizierung auf einer mit Kohlefaser-Geweben ummantelten Wabenstruktur,
- Fig. 8A-D: eine Ausführungsform von Infrarot-Teleskopspiegeln,
- Fig. 9A-C: eine Darstellung von Verfahrensschritten einer weiteren Ausführungsform und
- Fig. 10A, B: eine Darstellung von Verfahrensschritten einer weiteren Ausführungsform ähnlich den nach Fig. 9.

### Beispiel 1:

40 Kohlefaser-Gewebeprepregs mit Satin-Bindung, einem Phenolharzanteil von 35 Gew.-% und einem Durchmesser von 150 mm werden in einer beheizbaren axialen Presse bei einer Temperatur von 200°C und einer Preßdauer von 8 Minuten zu einem CFK-Formkörper mit einem Durchmesser von 150 mm bzw. einer Wandstärke von 12 mm verpreßt. Der nach dem Entformen erhaltene Formkörper, beispielsweise diese Platte, wird nun in einem Reaktor unter Ausschluß von Sauerstoff, d.h. im Vakuum oder in einer Schutzgasatmosphäre, bei etwa 1000°C carbonisiert. Um die Reaktivität der Kohlenstoffasern zu minimieren bzw. den E-Modul zu beeinflussen, wird der Vollkörper einer Temperatur von mehr als 2000°C unter Sauerstoffausschluß, d.h. im Vakuum oder in einer Schutzgasatmosphäre, ausgesetzt, wodurch der durch Carbonisieren des Phenolharzes gebildete Matrixkohlenstoff zumindest teilweise graphitiert wird. Diese Graphitierung erfolgt beispielsweise mit einer Aufheizgeschwindigkeit von 30 K/min und einer Haltezeit von 2 Stunden bei 2100°C. Der erhaltene CFC-Vollkörper besitzt eine Dichte von 1,0 g/cm³.

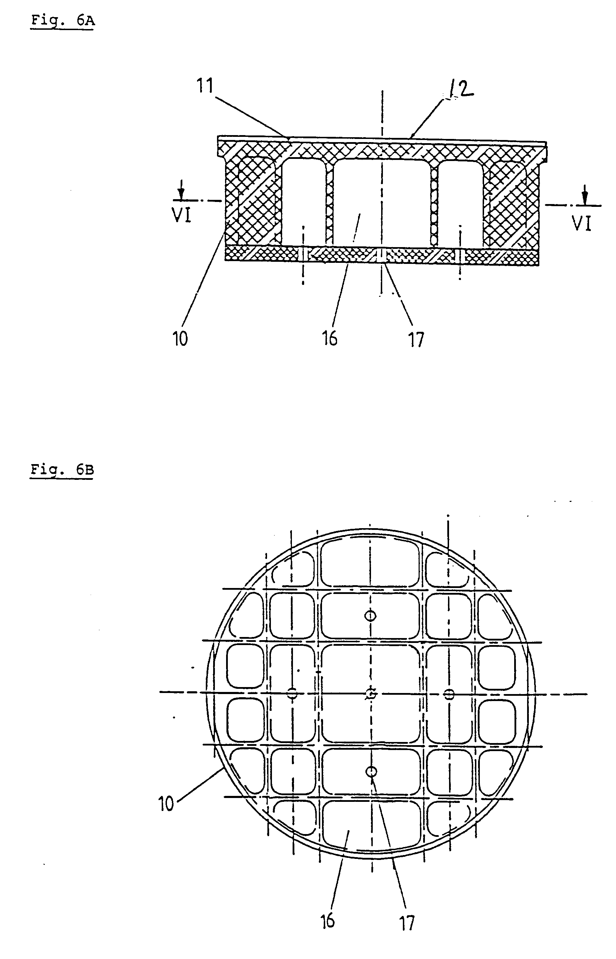

Aus dem Vollkörper wird dann maschinell durch Dreh-, Fräs- und/oder eine Schleifbearbeitung der in Fig. 6 dargestellte Rohling, welcher als Trägersubstrat für optisch reflektierende Spiegelstrukturen dient, hergestellt.

Der Rohling wird in einem Druck-Autoklaven bei 500 bar erneut mit Phenolharz imprägniert. Nach der Druckimprägnierung wird das Bauteil mit einem metallischen Silicium-Formkörper (Durchmesser 123 mm, Wandstärke 0,8 mm) beklebt. Als Kleber wird z.B. ein handelsüblicher Siliciumcarbidkleber vom Typ RTS 7700 der Fa. Kager verwendet, welcher bei 100°C an Luft ohne Schwinden antrocknet. Das imprägnierte Bauteil wird in einem Reaktor bei 1000°C und bei einem Druck von 10 mbar erneut carbonisiert. Die Aufheizgeschwindigkeit beträgt 2 Kelvin pro Minute, die Haltezeit 12 Stunden.

Der Rohling mit aufgeklebtem Silicium-Formkörper und einer Dichte von 1,18 g/cm³ wird nun in einem Vakuumofen mit einer Aufheizgeschwindigkeit von 20 K pro Minute auf eine Temperatur von 1390°C aufgeheizt und dort 30 Minuten gehalten. Nach der Abkühlung auf Raumtemperatur ist die Silicium-Scheibe ohne Deformierung fest mit dem CFC verzahnt.

Die mikroskopische Untersuchung der Schnittfläche durch ein Referenzbauteil bestätigte, daß der Silicium-Formkörper fest verzahnt und ohne erkennbare Risse und Poren auf das CFC-Grundsubstrat gefügt ist. Polierversuche mit Submikron-Diamantsuspensionen ergaben, daß sich die Silicium-Oberflächen problemlos auf Rauhtiefen Rₐ von kleiner als 15 Angström schleifen lassen und sich schon damit als optisch reflektierende Strukturen ausgezeichnet eignen. Abschließend wird mit Gold durch PVD die Spiegelfläche aufgebracht.

### Beispiel 2:

Kohlenstoff-Kurzfasern mit einer Länge von 10 - 30 mm werden in einer Phenolharzsuspension aufgeschlämmt. Der Fasergehalt in der Suspension beträgt 40 Gew.-%. Die Suspension wird in eine zylindrische Form mit einem Durchmesser von 150 mm und einer Höhe von 100 mm gefüllt. Bei 60 bis 70°C werden die im Phenolharz enthaltenen Lösungsmittel unter Vakuumatmosphäre entfernt. Bei einer Temperatursteigerung auf 180°C erfolgt die Aushärtung des Phenolharzes. Nach dem Entformen wird der zylindrische CFK-Vollkörper unter Ausschluß von Sauerstoff wie in Beispiel 1 carbonisiert.

Der enthaltene CFC-Vollkörper mit quasi-isotropem Gefüge weist eine Dichte von 0,55 g/cm³ und eine Porosität von etwa 70 Vol.-% auf. Um die Reaktivität der verwendeten Kohlefasern zu minimieren bzw. aus dem Phenolharz gebildeten Matrix-Kohlenstoff zumindest teilweise zu Graphit umzuwandeln, wird eine Graphitierung bei Temperaturen von größer 2000°C, wie in Beispiel 1 beschrieben, vorgenommen.

Aus dem zylindrischen Vollkörper werden dann maschinell durch Dreh-, Fräs- und/oder Schleifbearbeitung die in Fig. 6 dargestellten Bauteile hergestellt, die als Trägersubstrat für die Satelliten-Spiegelstrukturen dienen können.

Die Bauteile werden in einem Vakuumofen 50 Stunden lang bei 750°C und bei einem Partialdruck von 2 mbar unter Verwendung von Propan und Argon im Verhältnis 1:5 durch chemische Gasphasenabscheidung mit pyrolytischem Kohlenstoff infiltriert, bis ihre Dichte 0,90 g/cm³ beträgt und ihre offene Porosität auf ca. 30% abgenommen hat.

Die Bauteile werden jetzt in einer Hochtemperatur-Vakuumkammer in ein Graphitgefäß gestellt, dessen Boden mit geschmolzenem metallischen Silicium bedeckt ist. Aufgrund der Kapillarkräfte steigt das geschmolzene Silicium in dem Rohling nach oben, wodurch die Poren fast ganz mit Silicium gefüllt werden. Bei weiterer Temperatursteigerung auf etwa 1750°C - 1800°C wird ein Teil des metallischen Siliciums mit pyrolytischem Kohlenstoff zu Siliciumcarbid umgesetzt.

Nach Abkühlung auf Raumtemperatur weist das Bauteil eine Dichte von 1,75 g/cm³ auf, wobei in der Matrix 20% unreagiertes, freies metallisches Silicium vorliegt.

Das entstandene Ceramic Matrix Composite (CMC)-Bauteil 10 mit Ausnehmungen 16 und Bohrungen 17 wird jetzt an der für die Spiegelfläche vorgesehenen Stirnseite mittels einer Schleifmaschine geschliffen. Auf die geschliffene Oberfläche wird ein Silicium-Formteil 11 mit einem Durchmesser von 123 mm und einer Wandstärke von 1,0 mm ohne Verwendung von Klebern oder Harzbindemitteln aufgelegt und in einen Schutzgasofen eingebaut. In Argon-Atmosphäre wird das Bauteil mit einer Aufheizgeschwindigkeit von 30 K/min auf eine Temperatur von 1405°C aufgeheizt. Nach einer Haltezeit von 20 Minuten werden die Strukturen auf Raumtemperatur abgekühlt.

Eine Reflexionsschicht wird aufgebracht.

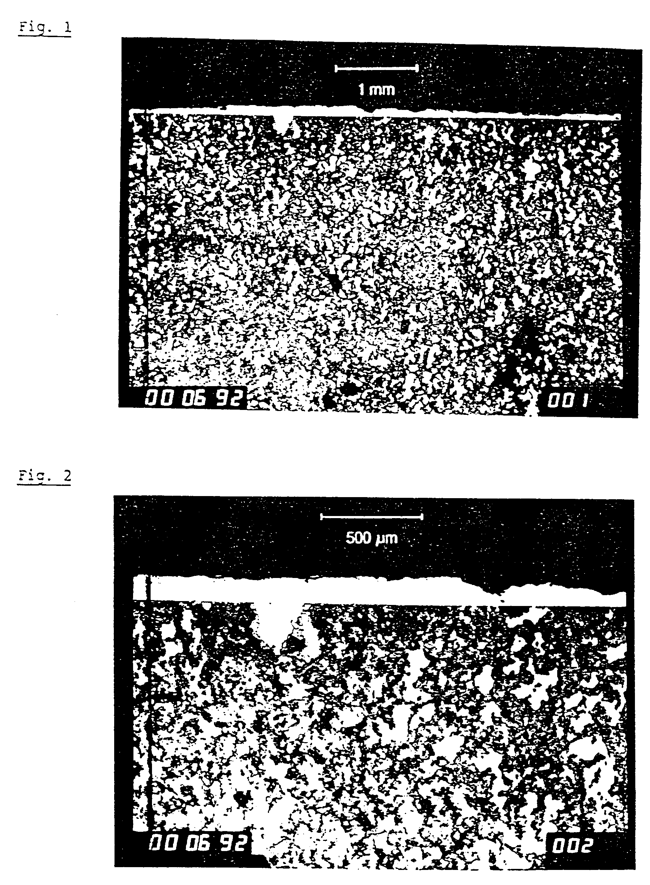

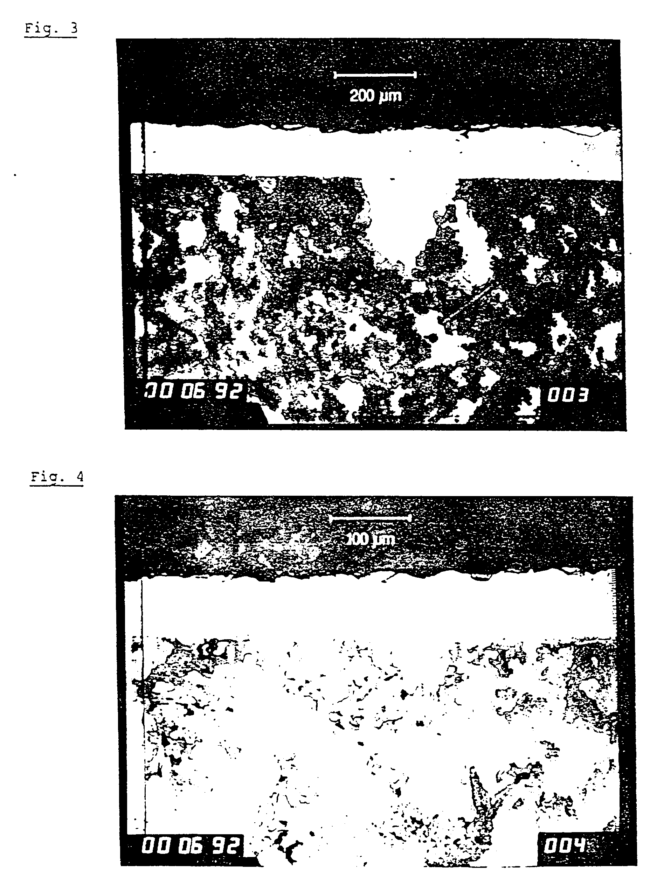

Um die Applizierung bzw. Fügung der Silicium-Teile zu prüfen, wurde ein Bauteil zersägt und ein Anschliff angefertigt. Die riß-, poren- und fugenfreie Aufsinterung des Siliciums zeigen die in Fig. 1 bis 4 dargestellten Mikroskop-Aufnahmen. Die Verzahnung beruht offensichtlich auf Diffusions- und Sintervorgängen zwischen dem Silicium aus dem CMC-Träger-Bauteil und dem Silicium-Formteil.

Nach der Bearbeitung wurden die Spiegelstrukturen auf ihre Thermoschock-Beständigkeit hin untersucht. In hundert Versuchen sind die Strukturen zyklischen Temperaturwechseln im Bereich von 0 - 700 K ausgesetzt worden. Gefügeanschliffe zeigten nach der Temperaturwechseluntersuchung keinerlei Rißbildungen im Gefüge und an der Grenzfläche zwischen Trägersubstrat und dem Silicium.

Aus dem Oberflächenbereich einer Spiegelstruktur wurde ein Stab mit den Abmessungen 50 x 4 x 4 mm herausgesägt und eine Dilatometer-Messung durchgeführt. Im Temperaturbereich von 0 - 700 K zeigt der Spiegelwerkstoff einen Wärmeausdehnungskoeffizienten von nur 2,0 10⁻⁶K⁻¹.

### Beispiel 3:

Es wird ein CFC-Vollkörper gemäß Beispiel 1 hergestellt. Nach der Carbonisierung, Graphitierung und Infiltration über die chemische Gasphasenabscheidung wird der CFC-Zylinder, wie in Fig. 6 angegeben, mechanisch bearbeitet. Auf das hochporöse CFC-Bauteil wird ein Silicium-Wafer mit einer Wandstärke von 0,8 mm unter Verwendung von Polysilan-Precursoren der Firma Wacker aufgeklebt. Nach dem Trocknen und Härten des Harzbindemittels in Argonatmosphäre bei 180°C wird das Bauteil mit einer Aufheizgeschwindigkeit von 3 Kelvin pro Minuten auf 1200°C weiter aufgeheizt und so die Polysilan-Precursoren pyrolisiert.

Danach wird die CFC-Struktur in einen Vakuumofen in einen Graphittiegel gestellt, der mit pulverförmigem metallischen Silicium gefüllt ist. Mit einer Aufheizgeschwindigkeit von 20 K pro Minute wird das System auf 1400°C aufgeheizt und nach einer 30-minütigen Haltezeit auf Raumtemperatur abgekühlt. Das aufgrund einer Dotierung schon bei ungefähr 1350°C schmelzende Silicium diffundiert in die poröse CFC-Matrix bis zur Trägersubstrat-Wafer-Grenzfläche und bewirkt eine sog. Reaktionsapplizierung der Silicium-Wafer auf den Composite. Ein Gefügeanschliff zeigt, daß sich das infiltrierte Silicium teilweise mit pyrolytischem Kohlenstoff zu Siliciumcarbid umgesetzt hat und der Gehalt an ungebundenem Silicium im Bauteil 21% beträgt. Der Silicium-Wafer ist ohne Poren, Risse oder Fugen und fest verzahnt auf das CMC-Composite gefügt. Diese optisch reflektierende Struktur mit einer Dichte von 1,7 g/cm³ wird mittels einer Läppmaschine kurzzeitig auf die geforderte Rautiefe poliert.

Bei diesem erfindungsgemäßen Verfahren ist besonders vorteilhaft, daß in situ sowohl die CMC-Herstellung als auch die Reaktionsapplizierung bzw. Fügung der Silicium-Wafer auf den CFC-Rohlingen erfolgt und so hochglatte Strukturen ausgebildet werden, die abschließend beschichtet werden.

### Beispiel 4:

Es wird ein handelsübliches Wabenmaterial auf Hartpapier-Basis mit einem Raumgewicht von 0,2 g/cm³ und einer Wabenschlüsselweite von 6 mm mit einem Phenolharz-Bindemittel imprägniert und bei 70°C getrocknet.

Auf den Wabenkörper mit einem Durchmesser von 400 mm und einer Wandstärke von 10 mm sind nun in einer beheizbaren Presse bei 200°C stirnseits jeweils drei Lagen Kohlefasergewebe-Prepregs aufgepreßt bzw. laminiert.

Die entstandene CFK-Struktur wird unter Ausschluß von Sauerstoff mit einer Aufheizgeschwindigkeit von 2 Kelvin pro Minuten auf 1000°C aufgeheizt und carbonisiert. Nach einer Haltezeit von 6 Stunden wird auf Raumtemperatur abgekühlt, und man erhält eine Wabenstruktur auf Kohlenstoffbasis, die - abgesehen von einer linearen Schrumpfung von etwa 17% - dem ursprünglichen CFK-Bauteil entspricht. Zur weiteren Verfestigung wird die noch poröse Wabenstruktur über die chemische Gasphasenabscheidung, wie in den Beispielen 1 und 3 beschrieben, mit pyrolytischem Kohlenstoff infiltriert. Das so gewonnene Bauteil mit einem Raumgewicht von 0,22 g/cm³ zeigt 4-Punkt-Biegebruchfestigkeiten von größer 150 N/mm².

Eine der mit Kohlefasergewebe laminierten Stirnseiten wird oberflächlich geschliffen und mit zwei Silicium-Wafern beklebt. Als Harzbindemittel wird ein Phenolharz-Siliciumpulver-Gemisch mit einem Gewichtsverhältnis von 2:1 verwendet.

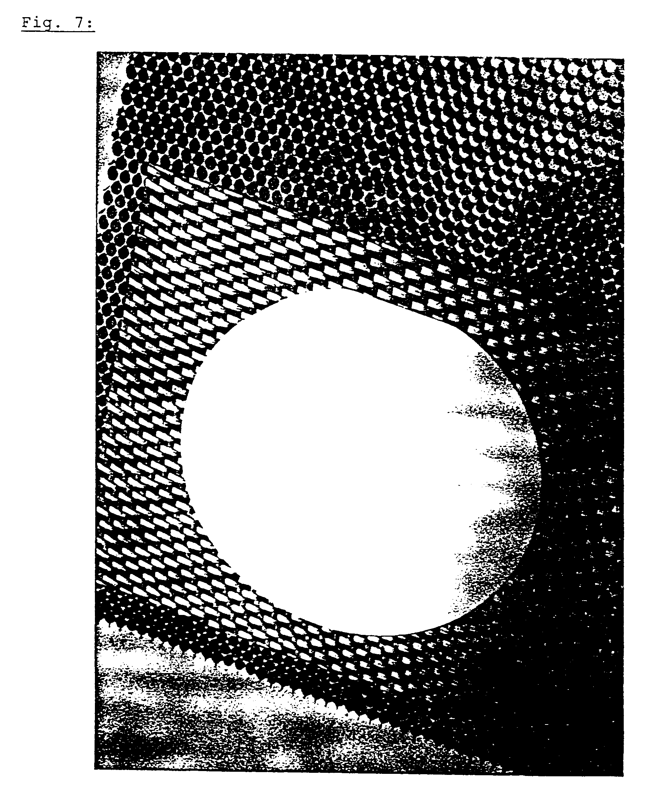

Im Anschluß daran erfolgt eine Siliciuminfiltration gemäß Beispiel 3, wobei die Wafer auf die Wabenstruktur appliziert werden. Die nach der Abkühlung erhaltene Spiegelstruktur auf Wabenbasis mit einem realen Raumgewicht von 0,42 g/cm³ ist in Fig. 7 dargestellt.

Der entstandene extrem leichte Konstruktionswerkstoff zeichnet sich neben seiner hohen Steifigkeit und Druckfestigkeit durch eine geringe Wärmeleitfähigkeit aus. Als besonders vorteilhaft erweist sich auch, daß die inneren flexiblen Wabenstrukturen wegen ihrer Dünnwandigkeit bei Thermoschock-Beanspruchung entsprechende Wärmeausdehnungen kompensieren und so zu erwartende thermisch induzierte Risse auf ein Minimum reduziert werden.

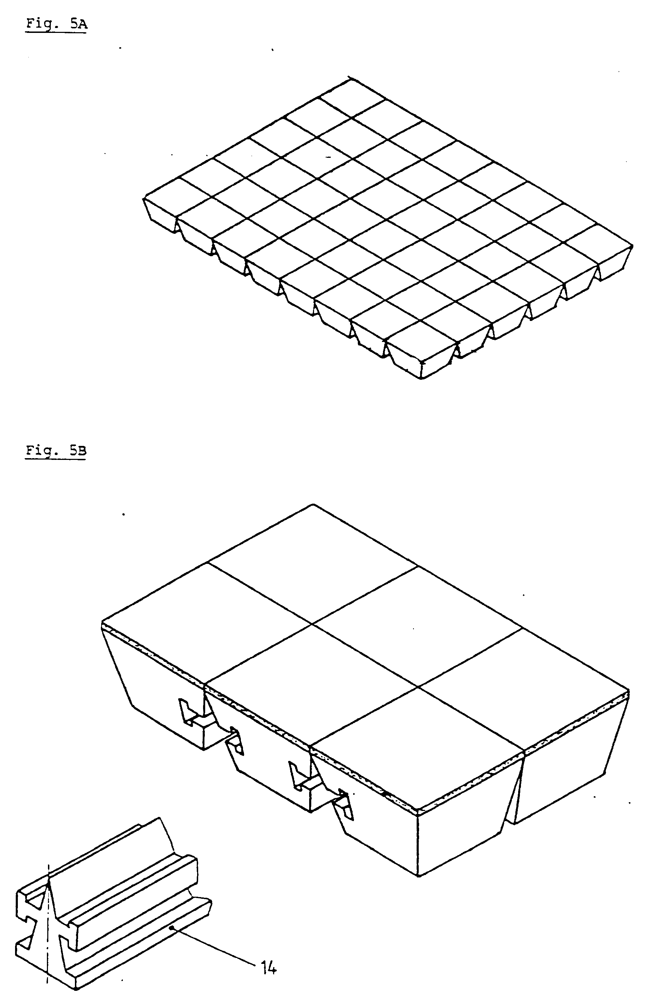

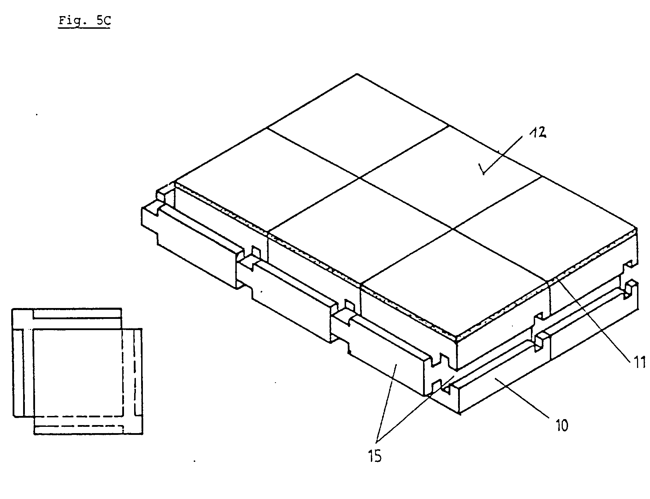

In Fig. 5 ist gezeigt, wie man einen großflächigen Spiegel aus Teilstücken zusammensetzen kann. Besonders vorteilhaft ist hier der Umstand, daß mittels Grundbausteinen bestehend aus Silicium-Wafern 11 und größenmäßig angepaßten Trägerstrukturen 10 jede beliebige Spiegelgröße zusammengesetzt werden kann. Die Trägerstrukturen 10 werden hierbei über Stege 14 (vorzugsweise aus CFC-Material) zusammengehalten. Wenn die Spalten zwischen den einzelnen Bausteinen nicht stören, so kann der Aufbau aus fertigen Einzel-Reflektoren erfolgen. Selbstverständlich ist es auch möglich, die "Rohlinge" miteinander zu verbinden und gemeinsam dem oben dargestellten Verfahren zu unterziehen, so daß sich alle Teile fest miteinander verbinden.

Bei der in Fig. 5C gezeigten Ausführungsform sind keine Stege 14 mehr nötig, da die Trägerstrukturen 10 jeweils Nut- und Federverbindungen 15 aufweisen.

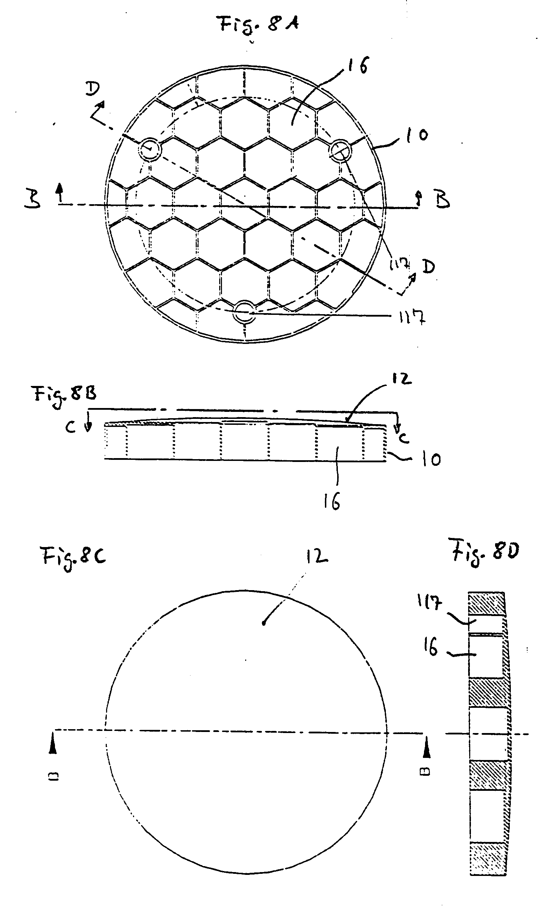

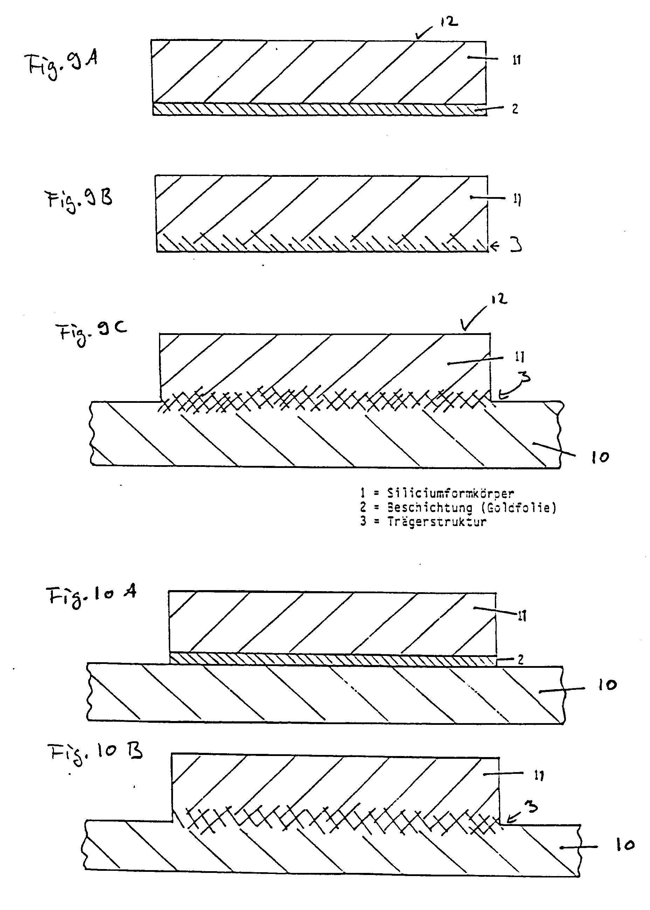

Bei der in den Figuren 8 gezeigten Ausführungsform der Erfindung ist das CMC-Bauteil zur Bildung der Trägerstruktur 10 mit wabenförmigen Ausnehmungen 16 versehen. Darüber hinaus sind bei diesem Ausführungsbeispiel drei Halteausnehmungen 117 miteingeformt, an welchen Sockelstifte oder dergl. zum Halten des fertigen Spiegels fixiert werden können. Im übrigen sind bei dieser Ausführungsform der Erfindung für gleiche oder gleich wirkende Teile dieselben Bezugsziffern angegeben. Die Herstellung kann wie oben beschrieben erfolgen.

Nachfolgend wird anhand der Figuren 9 und 10 eine weitere Ausführungsform des Verfahrens beschrieben.

Wie in Fig. 9A gezeigt, wird hierbei zunächst ein Formkörper 11 aus metallischem Silicium (ein Wafer) an seiner, der reflektierenden Fläche 12 gegenüberliegenden Fläche mit einem NE-Metall, insbesondere mit Gold, beschichtet. Dieses Beschichten kann durch Aufbringen einer Goldfolie oder durch Sputtern erfolgen. Der so entstehende Körper ist in Fig. 9A gezeigt.

Dieser Körper wird nun einer Wärmebehandlung unterzogen, so daß die Goldschicht 2 mit dem Silicium 11 ein Schmelzeutetikum ausbildet, das in Fig. 9B mit der Bezugsziffer 3 bezeichnet ist.

Der so entstandene, in Fig. 9B gezeigt Körper wird nun auf die Trägerstruktur 10 aufgebracht, woraufhin die Gesamtanordnung einer weiteren Wärmebehandlung in einem Temperaturbereich zwischen 300 und 600°C unterzogen wird. Hierbei entsteht über den Bereich des Schmelzeutektikums 3 eine innige Verbindung des (in Fig. 9C) oberen Silicium-Formkörpers 11 mit der unteren Trägerstruktur 10.

Es ist auch möglich, anstelle eines gesonderten Verfahrensschrittes zur Bildung des Schmelzeutektikums auf der einen Fläche des Wafers 11 (gemäß Fig. 9) einen Wafer 11 unter Zwischenlage einer Goldschicht 2 direkt auf die Trägerstruktur 10 aufzubringen (Fig. 10A) und dann in einem einzigen Verfahrensschritt die beiden Körper 10 und 11 unter Bildung einer Zone 3 des Schmelzeutektikums miteinander zu verbinden, wie dies in Fig. 10B gezeigt ist.

Wesentlich an dieser Ausführungsform des Verfahrens ist die Tatsache, daß die Verbindung zwischen dem Silicium-Formkörper (dem Wafer) und der Trägerstruktur bei Temperaturen zwischen etwa 300 und 600°C bewerkstelligt werden kann, während bei der oben beschriebenen Ausführungsform des erfindungsgemäßen Verfahrens die Prozeßtemperaturen zwischen etwa 900 und 1500°C liegen. Darüber hinaus kann insbesondere bei Verwendung von Gold als NE-Metall in Normalatmosphäre bzw. bei Normaldruck gearbeitet werden.

Aus obiger Beschreibung ergibt sich, daß verschiedene Verfahrensschritte miteinander ohne weiteres kombinierbar sind.

## Patentansprüche

1. Verfahren zur Herstellung eines Reflektors zur Reflexion elektromagnetischer Wellen mit folgenden Schritten:
a) Herstellen eines porösen Trägerkörpers aus kohlenstoffaserverstärktem oder siliciumcarbidfaserverstärktem Verbundstoff,
b) Belegen des Trägerkörpers mit Silicium in Form von Pulver oder Siliciumformkörpern;
c) Infiltrieren des Trägerkörpers mit Silicium in einer Schutzgasatmosphäre oder in Vakuum, so daß das Silicium flüssig wird und das poröse Material mit dem flüssigen Silicium getränkt wird und an den Grenzflächen zwischen dem porösen Material und dem flüssigen Silicium eine Siliciumkarbidschicht erzeugt wird und sich der Belag aus Silicium durch Aufschmelzen oder durch Aufsintern mit dem infiltrierten Trägerkörper verbindet;
d) Abkühlen des Trägerkörpers mit dem darauf befindlichen Belag aus Silicium und Glätten des Belags, und
e) Aufbringen einer Reflexionsschicht aus Silicium, Kohlenstoff, Siliciumcarbid, Siliciumoxid, Siliciumnitrid, Gold, Silber, Nickel, Kupfer oder Legierungen der vorgenannten Metalle auf den geglätteten Belag.

2. Verfahren nach Anspruch 1,
wobei in Schritt
e) eine Reflexionsschicht aus Silicium, Kohlenstoff, Siliciumcarbid, Siliciumdioxid, Siliciumnitrid, Gold, Silber, Nickel, Kupfer oder Legierungen der vorgenannten Metalle durch physikalische Gasphasenabscheidung (PVD) im Temperaturbereich von 20° C bis 900° C aufgebracht wird.

3. Verfahren nach Anspruch 1,
wobei in Schritt
e) eine Reflexionsschicht aus Gold, Silber, Nickel, Kupfer oder Legierungen der vorgenannten Metalle durch Elektrolyse zwischen 20° C und 200° C aufgebracht wird.

4. Verfahren nach Anspruch 1,
wobei in Schritt
e) eine Reflexionsschicht aus Silicium, Siliciumcarbid, Siliciumoxid, Siliciumnitrid, Nickel oder Legierungen der vorgenannten Metalle durch thermisches Flammspritzen oder Plasmaspritzen aufgebracht wird.

5. Verfahren nach Anspruch 1,
wobei in Schritt
e) eine Reflexionsschicht aus Silicium, Kohlenstoff, Siliciumcarbid, Siliciumdioxid, Siliciumnitrid, Nickel oder Legierungen der Metalle durch chemische Gasabscheidung (CVD) im Temperaturbereich von 600°C bis 2000°C und im Vakuum oder unter Schutzgasatmosphäre aufgebracht wird.

6. Verfahren nach einem der Ansprüche 1 bis 5,
**dadurch gekennzeichnet**, daß vor dem Aufbringen der Reflexionsschicht eine Schicht aus Kohlenstoff aufgebracht wird.

7. Verfahren nach einem der Ansprüche 1 bis 6,
**dadurch gekennzeichnet**, daß in den porösen Trägerkörper vor dem Einbringen von Silicium Ausnehmungen eingearbeitet werden.

8. Verfahren nach einem der Ansprüche 1 bis 7,
**dadurch gekennzeichnet**, daß vor dem Belegen des Trägerkörpers mit Silicium das Silicium und/oder die Trägeroberfläche mit einem NE-Metall, das mit Silicium ein Schmelzeutektikum ausbildet, vorzugsweise mit Gold beschichtet und durch Wärmebehandlung bei 300° C bis 600° C das Schmelzeutektikum erzeugt wird.

9. Verfahren nach einem der Ansprüche 1 bis 8,
**dadurch gekennzeichnet**, daß der Trägerkörper einer Atmosphäre, welche siliciumdampf enthält, bei Temperaturen zwischen 1600° C und 2300° C ausgesetzt und mit Silicium infiltriert wird.

## Claims

1. Method of manufacturing a reflector for reflecting electromagnetic waves, the said method comprising the following steps:
a) the manufacture of a porous carrier body from carbon fibre-reinforced or silicon carbide fibre-reinforced composite;
b) the covering of the carrier body with silicon in the form of powder or silicon mouldings;
c) the infiltration of the carrier body with silicon in a protective gas atmosphere or in a vacuum, so that the silicon becomes liquid and the porous material is saturated with the liquid silicon and a silicon carbide coating is generated at the boundary faces between the porous material and the liquid silicon and the covering of silicon is connected to the infiltrated carrier body by melting-on or sintering-on;
d) the cooling of the carrier body with the covering of silicon located thereon, and the smoothing of the said covering; and
e) the application of a reflection coating made of silicon, carbon, silicon carbide, silicon oxide, silicon nitride, gold, silver, nickel, copper or alloys of the aforesaid metals, to the smoothed covering.

2. Method according to claim 1,
wherein, in step
e), a reflection coating made of silicon, carbon, silicon carbide, silicon dioxide, silicon nitride, gold, silver, nickel, copper or alloys of the aforesaid metals is applied by physical vapour deposition (PVD) in a temperature range of 20°C to 900°C.

3. Method according to claim 1,
wherein, in step
e), a reflection coating made of gold, silver, nickel, copper or alloys of the aforesaid metals is applied by electrolysis at between 20°C and 200°C.

4. Method according to claim 1,
wherein, in step
e), a reflection coating made of silicon, silicon carbide, silicon oxide, silicon nitride, nickel or alloys of the aforesaid metals is applied by thermal flame spraying or plasma spraying.

5. Method according to claim 1,
wherein, in step
e), a reflection coating made of silicon, carbon, silicon carbide, silicon dioxide, silicon nitride, nickel or alloys of the aforesaid metals is applied by chemical vapour deposition (CVD) in a temperature range from 600°C to 2000°C and in a vacuum or a protective gas atmosphere.

6. Method according to one of claims 1 to 5,
**characterised in that**
a coating made of carbon is applied before the application of the reflection coating.

7. Method according to one of claims 1 to 6,
**characterised in that**
recesses are incorporated in the porous carrier body before the introduction of silicon.

8. Method according to one of claims 1 to 7,
**characterised in that,**
before the covering of the carrier body with silicon, the silicon and/or the carrier surface is coated with an NF metal, preferably gold, which forms a molten eutectic with silicon, and the said molten eutectic is generated by heat treatment at 300°C to 600°C.

9. Method according to one of claim 1 to 8,
**characterised in that**
the carrier body is exposed, at temperatures between 1600°C and 2300°C, to an atmosphere containing silicon vapour, and is infiltrated with silicon.

## Revendications

1. Procédé de fabrication d'un réflecteur pour la réflexion d'ondes électromagnétiques présentant les étapes suivantes :
a) fabrication d'un corps de support poreux en matériau composite renforcé par fibres de carbone ou renforcé par fibres de carbure de silicium ;
b) recouvrement du corps de support avec du silicium sous forme de poudre ou de corps préformés en silicium ;
c) infiltration du corps de support avec du silicium dans une atmosphère contrôlée ou sous vide, de sorte que le silicium devient liquide, que le matériau poreux est imprégné avec le silicium liquide, qu'une couche de carbure de silicium est produite sur les surfaces limites entre le matériau poreux et le silicium liquide et que le revêtement en silicium se combine par fonte ou par frittage avec le corps de support infiltré ;
d) refroidissement du corps de support avec le revêtement en silicium se trouvant sur celui-ci et lissage du revêtement, et
e) application d'une couche de réflexion en silicium, carbone, carbure de silicium, oxyde de silicium, nitrure de silicium, or, argent, nickel, cuivre ou alliages des métaux précités sur le revêtement lissé.

2. Procédé selon la revendication 1, dans lequel dans l'étape e) une couche de réflexion en silicium, carbone, carbure de silicium, dioxyde de silicium, nitrure de silicium, or, argent, nickel, cuivre ou alliages des métaux précités est appliquée par dépôt physique en phase vapeur (PVD) dans la plage de température comprise entre 20° et 900°C.

3. Procédé selon la revendication 1, dans lequel dans l'étape e) une couche de réflexion en or, argent, nickel, cuivre ou alliages des métaux précités est appliquée par électrolyse entre 20°C et 200°C.

4. Procédé selon la revendication 1, dans lequel dans l'étape e) une couche de réflexion en silicium, carbure de silicium, oxyde de silicium, nitrure de silicium, nickel ou alliages des métaux précités est appliquée par projection thermique à la flamme ou au plasma.

5. Procédé selon la revendication 1, dans lequel dans l'étape e) une couche de réflexion en silicium, carbone, carbure de silicium, dioxyde de silicium, nitrure de silicium, nickel ou alliages de ces métaux est appliquée par dépôt chimique en phase vapeur (CVD) dans la plage de température de 600°C à 2000°C et sous vide ou en atmosphère contrôlée.

6. Procédé selon l'une des revendications 1 à 5, caractérisé en ce que, avant l'application de la couche de réflexion, une couche en carbone est appliquée.

7. Procédé selon l'une des revendications 1 à 6, caractérisé en ce que, avant l'apport de silicium, des évidements sont réalisés dans le corps de support poreux.

8. Procédé selon l'une des revendications 1 à 7, caractérisé en ce que, avant le recouvrement du corps de support avec du silicium, le silicium et/ou la surface de support est revêtu(e) d'un métal non-ferreux qui forme avec le silicium un système eutectique de fusion, de préférence d'or, et en ce que le système eutectique de fusion est produit par traitement thermique à une température comprise entre 300°C et 600°C.

9. Procédé selon l'une des revendications 1 à 8, caractérisé en ce que le corps de support est exposé à une atmosphère, laquelle contient de la vapeur de silicium, à des températures comprises entre 1600°C et 2300°C et est infiltré de silicium.
